# EUROPÄISCHE PATENTSCHRIFT

(11) **EP 2 299 186 B1**
(45) Veröffentlichungstag und Bekanntmachung des Hinweises auf die Patenterteilung: **25.04.2018**
(21) Anmeldenummer: 10003152.5
(22) Anmeldetag: 24.03.2010
(51) Int. Cl.: F24D 17/00, F28D 21/00, E03F 7/00, F24D 10/00, F24D 19/10, F28F 27/02, F28D 15/00, E03F 3/00

(54) **Verfahren zum Transport von Wärmeenergie in einer Abwasserrohrleitung**
Method for transporting thermal energy in a sewage channel.
Procédé de transport d'énergie calorifique dans une canalisation d'eaux usées

(30) Priorität: 15.09.2009 DE 102009041595
(43) Veröffentlichungstag der Anmeldung: 23.03.2011
(73) Patentinhaber: Helmut Uhrig Straßen- und Tiefbau GmbH, 78187 Geisingen (DE)
(72) Erfinder: Uhrig, Thomas, 78187 Geisingen (DE)
(74) Vertreter: Müller-Boré & Partner Patentanwälte PartG mbB

(56) Entgegenhaltungen:
- WO-A1-2007/042283
- CH-A5- 696 251
- DE-A1- 3 240 944
- DE-A1- 19 719 311
- DE-A1-102007 042 671

## Beschreibung

Die Erfindung betrifft ein Verfahren zum Transport von Wärmeenergie.

Die Energiegewinnung aus Abwasser durch nachträglich in eine Abwasserrohrleitung eingebaute Wärmetauschervorrichtungen ist aus dem Stand der Technik bekannt, jedoch ist die gewinnbare Wärmeenergiemenge von der Abwassertemperatur abhängig, die zudem schwankend ist. Beispielsweise sind Haushaltsabwässer wärmer als Regenwasser, wodurch die Abwassertemperatur in einer Abwasserrohrleitung bei Regen sinkt, da sich geringe Mengen Haushaltsabwässer in der Regel mit größeren Mengen Regenwasser mischen. Aufgrund der gesunkenen Abwassertemperatur sinkt an einer Wärmeenergieentnahmestelle der Wirkungsgrad der Energiegewinnung aus dem Abwasser.

Die Druckschrift DE 10 2007 042 671 A1 offenbart eine Anordnung für einen Abwasserkanal zur Rückgewinnung von Wärmeenergie aus Abwasser mit wenigstens einem Wärmetauscher und wenigstens einer Aufstauvorrichtung sowie einen Abwasserkanal mit einer entsprechenden Anordnung. Die wenigstens eine Aufstauvorrichtung ist in Fließrichtung des Abwassers innerhalb des Abwasserkanals im Bereich des Wärmetauschers, insbesondere nach dem wenigstens einen Wärmetauscher, angeordnet.

Die Druckschrift DE 197 19 311 A1 offenbart eine Installation für Abwasser, mit einer Trockenwasserrinne zur Leitung von Abwasser, bei der die Trockenwasserrinne mindestens in Teilbereichen mindestens ein Wärmetauscherelement aufweist, welches mindestens ein Wärmetauscherelement in direktem Kontakt mit dem Abwasser steht, welches mindestens ein Wärmetauscherelement einen Kreislauf für ein vom Abwasser getrenntes Wärmetauschmedium aufweist, so daß Wärme über mindestens eine wärmeleitende Tauschfläche aus dem Abwasser aufgenommen und an das Wärmetauschmedium weitergegeben und über den Kreislauf einer Wärmepumpe zugeführt wird.

Die Druckschrift WO 2007/042283 A1 offenbart ein Wärmetauscherelement zum Einbau in Abwasserrohrleitungen, dessen Oberseite eine wärmeleitende Tauschfläche mit daran angeordneten Wärmetauscherkammern aufweist, das Wärmetauscherelement im Querschnitt eine Einlaufrinne und beidseits daran anschließende Ablaufflächen aufweist und im Bereich der Einlaufrinne und der Ablaufflächen Leitungen zum Vorlauf, Rücklauf und zur Verteilung eines Wärmetauschermediums angeordnet sind, wobei der Sohlpunkt der Einlaufrinne, der untere Bereich der Leitungen und/oder die freien Ränder der Ablaufflächen als Auflager zur Anordnung des Wärmetauscherelements in der Abwasserrohrleitung ausgebildet sind.

Ferner offenbart die Druckschrift DE 32 40 944 A1 ein Verfahren zur Wärmeversorgung von Gebäuden, bei dem ein zirkulierender Wärmeträger mit Abwärme eines Wärmekraftwerkes erwärmt wird, wobei der Wärmeträger auf einem Temperaturniveau gehalten wird, das dem Temperaturniveau des Kühlwassers eines im wesentlichen bezüglich des Kraftbetriebs optimierten Wärmekraftwerkes entspricht.

Die Druckschrift CH 696 251 A5 offenbart ein Verfahren zur Wärmenutzung, Abwärmenutzung oder Wärmerückgewinnung aus Brauchwässern und Abwässern, welche aus Siedlungsräumen stammen. Die aus verschiedenen Anwendungen, Geräten und Installationen anfallenden Brauchwasserströme und Abwasserströme werden vor ihrer Einleitung in Kanalisationen entsprechend wenigstens einer ihrer spezifischen Eigenschaften selektiv bewirtschaftet, differenziert behandelt und entweder einer direkten Wärmenutzung oder einer indirekten Nutzung mittels einer Wärmerückgewinnungsvorrichtung zugeführt und daraus die Energie in der von thermischer Energie gewinnt.

Es ist eine Aufgabe der vorliegenden Erfindung, ein Verfahren zum Transport von Wärmeenergie bereitzustellen, welches einfach durchzuführen ist und die aus dem Abwasser gewinnbare Wärmeenergiemenge an der Wärmeenergieentnahmestelle erhöht. Diese Aufgabe wird durch den Gegenstand des unabhängigen Anspruch 1 gelöst. Bevorzugte Ausführungsformen sind Gegenstand der abhängigen Ansprüche.

### Wärmetauscheranordnung

Eine exemplarische Wärmetauscheranordnung in einer Abwasserrohrleitung umfasst:
- zumindest einen ersten Wärmetauscher, welcher eine Wärmequelle mit Abwasser thermisch kontaktiert, um dem Abwasser Wärmeenergie zuzuführen,
- zumindest einen zweiten Wärmetauscher, welcher das Abwasser mit einer Wärmesenke thermisch kontaktiert, um dem Abwasser die Wärmeenergie zumindest teilweise wieder zu entziehen, um die Wärmeenergie zur Wärmesenke zu übertragen,
wobei der zumindest eine zweite Wärmetauscher entlang der Abwasserfließrichtung F - also stromabwärts - in der Abwasserrohrleitung angeordnet und von dem zumindest einen ersten Wärmetauscher beabstandet ist.

Vorteilhafterweise wird die Wärmequelle mit der Wärmesenke thermisch verbunden. Das heißt, daß Wärmeenergie von der Wärmequelle mittels des in der Abwasserrohrleitung fließenden Abwassers zur Wärmesenke hin übertragen wird. Der Begriff Abwasser umfaßt insbesondere Regenwasser, Schmutzwasser und Mischwasser. Unter der Abwasserrohrleitung werden alle Volumina verstanden, welche das Abwasser fassen, wozu insbesondere das eigentliche Abwasserrohr, aber auch die damit hydraulisch verbundenen abwassertechnischen Bauwerke, wie beispielsweise Wehre, Drosseln, Auffangbecken, Siebeinrichtungen, Hebewerke, Nebenrohrleitungen, usw. gehören.

Ausgehend von der Wärmequelle wird Wärmeenergie mittels des zumindest einen ersten Wärmetauschers in das in der Abwasserrohrleitung befindliche Abwasser überführt. Mit anderen Worten ist bei betriebsgemäßem Gebrauch der in der Abwasserrohrleitung befindliche, zumindest eine erste Wärmetauscher mit einer Wärmequelle thermisch kontaktiert, um das Abwasser in der Abwasserrohrleitung zu erwärmen. Mittels zumindest eines zweiten Wärmetauschers, der bei betriebsgemäßen Gebrauch in der Abwasserrohrleitung befindlich ist, wird dem Abwasser die Wärmeenergie zumindest teilweise wieder entzogen, um diese zur Wärmesenke zu übertragen. Wärmequelle und Wärmesenke befinden sich vorteilhafterweise außerhalb der Abwasserrohrleitung. Der zumindest eine erste Wärmetauscher ist von dem zumindest einen zweiten Wärmetauscher beabstandet in der Abwasserrohrleitung angeordnet. Das Abwasser fließt entlang der Abwasserfließrichtung F von dem zumindest einen ersten Wärmetauscher zu dem zumindest einen zweiten Wärmetauscher, wobei die Abwasserfließrichtung F in der Regel dem Gefälle der Abwasserrohrleitung folgt. Mit anderen Worten ist der zumindest eine zweite Wärmetauscher, bezogen auf den Meeresspiegel, tiefer angeordnet als der zumindest eine erste Wärmetauscher, beziehungsweise der zweite Wärmetauscher liegt stromabwärts vom ersten Wärmetauscher. In Ausnahmefällen wird das Abwasser mittels einer Pumpanlage bzw. zumindest eines Wehres entgegen der Schwerkraft und entgegen dem Gefälle der Abwasserrohrleitung gefördert, so daß die Abwasserfließrichtung F und damit die Richtung "stromabwärts" durch die Förderrichtung der Pumpanlage bestimmt ist.

Vorteilhafterweise kann mittels der Wärmetauschervorrichtung in einfacher und kostengünstiger Weise Wärmeenergie von der Wärmequelle zur Wärmesenke transportiert werden. Weiter vorteilhafterweise ist die Wärmetauscheranordnung in einfacher Weise herzustellen, selbst wenn der Abstand zwischen der Wärmequelle und der Wärmesenke, beziehungsweise dem ersten Wärmetauscher und dem zweiten Wärmetauscher, relativ groß ist, da die Entfernung zwischen dem ersten Wärmetauscher und dem zweiten Wärmetauscher durch die bereits vorhandene Abwasserrohrleitung erfolgt. So sind vorteilhafterweise lediglich Montagearbeiten im Bereich der Wärmequelle zur Installation des zumindest einen ersten Wärmetauschers sowie im Bereich der Wärmesenke zur Installation des zumindest einen zweiten Wärmetauschers notwendig, während die Abwasserrohrleitung zwischen dem ersten Wärmetauscher und dem zweiten Wärmetauscher unbeeinträchtigt bleibt. Durch die Nutzung der Abwasserrohrleitung kann somit vorteilhafterweise auf das Verlegen eigener Versorgungsleitungen, beziehungsweise Transportleitungen, zum Transport von Wärmetauschermedium zwischen der Wärmequelle und der Wärmesenke verzichtet werden. Gleichzeitig ist die maximale Beabstandung zwischen der Wärmequelle und der Wärmesenke lediglich von der Länge der bereits vorhandenen Abwasserrohrleitung sowie den auftretenden Wärmeverlusten innerhalb der

Abwasserrohrleitung abhängig. Somit kann der Transport von Wärmeenergie mittels der Wärmetauscheranordnungen über Distanzen von wenigen Metern, oder etwa 100 m bis zu mehreren Kilometern erfolgen.

Der zumindest eine erste Wärmetauscher beziehungsweise der zumindest eine zweite Wärmetauscher ist ausgelegt, um mit dem Abwasser in der Abwasserrohrleitung in Kontakt, d.h. zumindest in thermischem Kontakt, zu sein. Der thermische Kontakt bezeichnet den Übergang von Wärmeenergie aus dem ersten oder zweiten Wärmetauscher in das Abwasser und umgekehrt. Der Kontakt kann neben dem thermischen Kontakt insbesondere ein direktes Benetzen des ersten beziehungsweise zweiten Wärmetauschers durch das Abwasser umfassen. Bevorzugt ist der Bereich bzw. Teil des ersten Wärmetauschers beziehungsweise des zweiten Wärmetauschers, welcher mit dem Abwasser in Kontakt steht, aus einem wärmeleitenden starren Material ausgebildet, insbesondere aus korrosionsbeständigem Edelstahl.

Es versteht sich, daß die äußere Gestalt beziehungsweise die Ausbildung des ersten Wärmetauschers beziehungsweise des zweiten Wärmetauschers so ausgelegt ist, daß sie an dem jeweiligen Querschnitt der betreffenden Abwasserrohrleitung angepaßt ist. Bevorzugt sind der erste Wärmetauscher und/oder der zweite Wärmetauscher so ausgebildet, daß die Wärmetauscher durch einen Kanaleinstieg in die Abwasserrohrleitung eingebracht und in die Eckposition verlagert werden können. Mit anderen Worten umfassen der erste Wärmetauscher und/oder der zweite Wärmetauscher Wärmetauscherelemente, welche eine geringe Längserstreckung, insbesondere von weniger als etwa 100 cm oder etwa 65 cm, aufweisen und aus welchen der erste Wärmetauscher beziehungsweise der zweite Wärmetauscher zusammenmontiert wird. Vorteilhafterweise ist es in diesem Fall nicht notwendig, die Abwasserrohrleitung mittels Baugruben freizulegen, um den ersten Wärmetauscher beziehungsweise den zweiten Wärmetauscher in der Abwasserrohrleitung zu montieren.

Alternativ können der erste Wärmetauscher und/oder der zweite Wärmetauscher in der Wandung eines Abwasserrohrleitungssegmentes ausgebildet sein. Beispielsweise können der erste Wärmetauscher beziehungsweise der zweite Wärmetauscher derart in der Wandung der Abwasserrohrleitung eingebettet sein, daß die Kontaktfläche des ersten Wärmetauschers beziehungsweise des zweiten Wärmetauschers mit dem Abwasser in der Abwasserrohrleitung als Teil der Abwasserrohrleitungsinnenwand ausgebildet ist. Weiter beispielsweise können der erste Wärmetauscher beziehungsweise der zweite Wärmetauscher derart in die Wandung der Abwasserrohrleitung eingebettet sein, daß der Wärmeaustausch zwischen dem Abwasser und dem ersten Wärmetauscher und/oder dem zweiten Wärmetauscher mittelbar über das Material der Abwasserrohrleitung erfolgt. Solche Segmente der Abwasserrohrleitung, welche mit einem darin eingebetteten Wärmetauscher versehen sind, können bevorzugt industriell vorgefertigt sein, wobei beim Bau der Abwasserrohrleitung diese Segmente verwendet werden oder wobei Segmente einer bestehenden Abwasserrohrleitung durch solche mit einem Wärmetauscher versehene Segmente ausgetauscht werden.

Vorzugsweise umfaßt die Wärmetauscheranordnung einen Warmwasservorlauf und einen Kaltwasserrücklauf, wobei dem zumindest einen ersten Wärmetauscher ein von der Wärmequelle erwärmtes erstes Wärmetauschmedium mittels des Warmwasservorlaufs zuführbar ist und wobei der Wärmequelle das von dem zumindest einen ersten Wärmetauscher abgekühlte erste Wärmetauschmedium mittels des Kaltwasserrücklaufs zuführbar ist.

Das Überführen von Wärmeenergie von der Wärmequelle in das Abwasser erfolgt bevorzugt mittels eines ersten Wärmetauschmediums, welches in erwärmtem Zustand von der Wärmequelle über einen Warmwasservorlauf zu dem Wärmetauscher geführt wird. Um die Wärmeenergie des ersten Wärmetauschmediums mittels des ersten Wärmetauschers in das mit dem ersten Wärmetauscher thermisch kontaktierende Abwasser zu überführen, muß ein thermischer Gradient zwischen dem ersten Wärmetauschmedium und dem Abwasser herrschen. Mit anderen Worden darf kein thermisches Gleichgewicht zwischen beiden vorhanden sein, sondern das Abwasser muß eine niedrigere Temperatur aufweisen als das Wärmetauschmedium. In betriebsgemäßem Gebrauch der Wärmetauscheranordnung wird dem ersten Wärmetauscher kontinuierlich erstes Wärmetauschmedium, welches von der Wärmequelle erwärmt ist, mittels des Warmwasservorlaufs zugeführt. In dem ersten Wärmetauscher kühlt sich das erste Wärmetauschmedium, in Abhängigkeit von der Temperatur des mit dem ersten Wärmetausch kontaktierenden Abwassers, ab, um im abgekühlten Zustand über den Kaltwasserrücklauf zurück zur Wärmequelle geleitet zu werden. Somit wird die Wärmeenergie von der Wärmequelle zu dem Abwasser übertragen. Bevorzugt erfolgt die Zirkulation des ersten Wärmetauschmediums von der Wärmequelle zum ersten Wärmetauscher und zurück mittels einer Pumpe. Weiter bevorzugt besteht das Wärmetauschmedium im wesentlichen aus Wasser. Alternativ kann auch ein Öl oder ein anderes Fluid mit einer hinreichend großen Wärmekapazität als erstes Wärmetauschmedium verwendet werden.

Vorzugsweise umfaßt die Wärmetauscheranordnung einen Kaltwasservorlauf und einen Warmwasserrücklauf, wobei dem zumindest einen zweiten Wärmetauscher ein von der Wärmesenke abgekühltes zweites Wärmetauschmedium mittels des Kaltwasservorlaufs zuführbar ist und wobei der Wärmesenke das von dem zumindest einen zweiten Wärmetauscher erwärmte zweite Wärmetauschmedium mittels des Warmwasserrücklaufs zuführbar ist.

Um Wärmeenergie von dem zumindest einen zweiten Wärmetauscher zur Wärmesenke zu übertragen, wird ein zweites Wärmetauschmedium in dem zweiten Wärmetauscher erwärmt und mittels eines Warmwasserrücklaufs zur Wärmesenke geleitet. Um die in dem Abwasser enthaltene Wärmeenergie nutzbar zu machen, muß ein thermischer Gradient zwischen dem Abwasser und dem zweiten Wärmetauschmedium herrschen. Das heißt, daß das Abwasser eine höhere Temperatur aufweisen muß als das zweite Wärmetauschmedium. Aus diesem Grund wird im betriebsgemäßen Gebrauch der Wärmetauscheranordnung das zweite Wärmetauschmedium durch die Wärmesenke auf eine Temperatur abgekühlt, welche geringer ist als die Temperatur des Abwassers. Dieses abgekühlte zweite Wärmetauschmedium wird kontinuierlich mittels des Kaltwasservorlaufs dem zweiten Wärmetauscher zugeführt, wobei sich das zweite Wärmetauschmedium in dem zweiten Wärmetauscher erwärmt und über den Warmwasserrücklauf wieder zurück zur Wärmesenke hingeführt wird. Bevorzugt erfolgt die kontinuierliche Zirkulation des zweiten Wärmetauschmediums von der Wärmesenke zum zweiten Wärmetauscher und zurück mittels einer Pumpe. Das zweite Wärmetauschmedium besteht im wesentlichen aus Wasser beziehungsweise einer wäßrigen Lösung. Alternativ kann auch ein Öl beziehungsweise ein Fluid mit einer hinreichend großen Wärmekapazität verwendet werden.

Vorzugsweise umfaßt die Wärmetauscheranordnung eine Regeleinheit, wobei die Regeleinheit mit einem ersten Temperatursensor, der stromabwärts des ersten Wärmetauschers und stromaufwärts des zweiten Wärmetauschers angeordnet ist, und/oder mit einem zweiten Temperatursensor, der stromabwärts des zweiten Wärmetauschers angeordnet ist, verbunden ist.

Vorteilhafterweise kann mittels der Regeleinheit die Abwassertemperatur des Abwassers in der Abwasserrohrleitung in einem vorbestimmten Bereich gehalten werden. Somit wird vorteilhafterweise verhindert, daß zu kaltes oder zu warmes Abwasser, ausgehend vom zweiten Wärmetauscher stromabwärts, innerhalb der Abwasserrohrleitung transportiert wird. Weiter vorteilhafterweise kann mittels der Regeleinheit, in Verbindung mit dem ersten Temperatursensor, verhindert werden, daß das Abwasser mittels des ersten Wärmetauschers eine vorbestimmte Abwassertemperatur überschreitet.

Vorzugsweise umfaßt die Wärmetauscheranordnung eine zweite Abwasserrohrleitung, welche mit der Abwasserrohrleitung hydraulisch verbindbar ist, und zumindest einen dritten Wärmetauscher, welcher ausgelegt ist, das Abwasser mit einer zweiten Wärmesenke thermisch zu kontaktieren, wobei die jeweilige Abwasserfließmenge durch die Abwasserrohrleitung und die zweite Abwasserrohrleitung steuerbar oder regelbar ist.

Es versteht sich, daß die Wärmetauscheranordnung auch eine dritte Abwasserrohrleitung mit einem vierten Wärmetauscher, eine vierte Abwasserrohrleitung mit einem fünften Wärmetauscher, usw. umfassen kann, wobei die dritte und vierte Abwasserrohrleitung jeweils mit der Abwasserrohrleitung hydraulisch verbindbar ist. Somit kann vorteilhafterweise eine Mehrzahl von Wärmetauschern, welche ausgelegt sind, jeweils mit zumindest einer zugeordneten Wärmesenke thermisch zu kontaktieren, mit Abwasser beaufschlagt werden, welches mittels der Wärmequelle über den zumindest einen ersten Wärmetauscher erwärmbar ist und über die Abwasserrohrleitung zugeführt werden kann.

Daß die zweite Abwasserrohrleitung mit der Abwasserrohrleitung hydraulisch verbindbar ist, bedeutet, daß die hydraulische Verbindung zumindest zeitweise unterbrochen sein kann, bei Bedarf jedoch herstellbar ist. Insbesondere kann die hydraulische Verbindung zwischen der Abwasserrohrleitung und der zweiten Abwasserrohrleitung in Abhängigkeit von der jeweils in den Abwasserrohrleitungen befindlichen Abwassermenge abhängig sein.

Vorzugsweise umfaßt die Wärmetauscheranordnung zumindest eine Sperrvorrichtung, welche aus Richtung des ersten Wärmetauschers kommendes Abwasser zu vorbestimmbaren Anteilen zu dem zweiten Wärmetauscher und zu dem dritten Wärmetauscher fließen lassen kann. Mit anderen Worten kann die zumindest eine Sperrvorrichtung die hydraulische Verbindung zwischen der Abwasserrohrleitung und der zweiten Abwasserrohrleitung steuern bzw. regeln. Dabei kann die zumindest eine Sperrvorrichtung in bzw. an der Abwasserrohrleitung ausgebildet sein oder in oder an der zweiten Abwasserrohrleitung ausgebildet sein. Insbesondere kann die zumindest eine Sperrvorrichtung ein Wehr oder einen Schieber umfassen, welches/welcher ausgelegt ist, die durch die Abwasserrohrleitung in Richtung des zweiten Wärmetauschers fließende Abwassermenge zu steuern bzw. zu regeln. Die hydraulische Verbindung zwischen der Abwasserrohrleitung und der zweiten Abwasserrohrleitung kann dabei stromaufwärts der zumindest einen Sperrvorrichtung angeordnet sein, so daß Abwasser aus der Abwasserrohrleitung in die zweite Abwasserrohrleitung fließt, wenn die zumindest eine Sperrvorrichtung in der Abwasserrohrleitung geschlossen ist. Insbesondere kann das Schließen der zumindest einen Sperrvorrichtung in der Abwasserrohrleitung bewirken, daß das Abwasser aus der Abwasserrohrleitung entgegen dem Gefälle in der zweiten Abwasserrohrleitung in dieser in Richtung des dritten Wärmetauschers aufsteigt. Bevorzugt ist dabei der erste Wärmetauscher in der Abwasserrohrleitung höher angeordnet als der dritte Wärmetauscher in der zweiten Abwasserrohrleitung, so daß das Abwasser vom ersten Wärmetauscher entlang der Abwasserfließrichtung F durch die Abwasserrohrleitung bis zu der zumindest einen Sperrvorrichtung fließt und dann entgegen dem Gefälle in der zweiten Abwasserrohrleitung zu dem dritten Wärmetauscher fließt, so daß ein Transport von Wärmeenergie von dem ersten Wärmetauscher zu dem zweiten Wärmetauscher erfolgen kann.

Weiter bevorzugt kann die zumindest eine Sperrvorrichtung in der zweiten Abwasserrohrleitung angeordnet sein, so daß die gesamte aus Richtung des ersten Wärmetauschers kommende Abwassermenge in der Abwasserrohrleitung verbleibt, wenn die zumindest eine Sperrvorrichtung geschlossen bzw. teilweise geschlossen ist.

Vorzugsweise umfaßt die Wärmetauscheranordnung eine erste Durchflußsteuereinrichtung, wobei die erste Durchflußsteuereinrichtung stromabwärts des ersten Wärmetauschers angeordnet ist. Bevorzugt kann die erste Durchflußsteuereinrichtung ein Wehr, ein Spülschieber oder eine Drossel umfassen. Die erste Durchflußsteuereinrichtung ist dazu ausgelegt, die stromabwärts fließende Abwassermenge zu steuern bzw. zu regeln. Insbesondere ist die erste Durchflußsteuereinrichtung dazu ausgelegt, anfallendes Abwasser in der von der ersten Durchflußsteuereinrichtung gesehen stromaufwärts liegenden Abwasserrohrleitung zu stauen. Dazu kann die erste Durchflußsteuereinrichtung den relativen Durchflußquerschnitt im Verhältnis zum Durchflußquerschnitt der Abwasserrohrleitung, bevorzugt in einem Bereich von etwa 0% bis etwa 100%, verändern. Insbesondere ist der relative Durchflußquerschnitt der ersten Durchflußsteuereinrichtung zumindest bereichsweise stufenlos einstellbar.

Die Anordnung der ersten Durchflußsteuereinrichtung erfolgt bevorzugt im unmittelbaren Anschluß stromabwärts des ersten Wärmetauschers in der Abwasserrohrleitung. Bevorzugt ist die erste Durchflußsteuereinrichtung weniger als 100 m, weiter bevorzugt weniger als 50 m und insbesondere weniger als 10 m von dem ersten Wärmetauscher beabstandet angeordnet.

Vorteilhafterweise kann das anfallende Abwasser mittels der ersten Durchflußsteuereinrichtung in der Abwasserrohrleitung im Bereich des ersten Wärmetauschers gestaut werden. Da die Menge an Wärmeenergie, welche von der Wärmequelle mittels des ersten Wärmetauschers an das Abwasser abgebbar ist, von der Kontaktzeit des Abwassers mit dem ersten Wärmetauscher und im wesentlichen von der Abwassermenge abhängt, kann die an das Abwasser abgebbare Wärmeenergie vorteilhafterweise durch ein Stauen des Abwassers in der Abwasserrohrleitung im Bereich des ersten Wärmetauschers gesteigert werden. Insbesondere kann mittels der ersten Durchflußsteuereinrichtung eine ausreichende Abwassermenge im Bereich des ersten Wärmetauschers vorgehalten werden, so daß eine vorbestimmte Wärmespeicherkapazität im Abwasser bereitgestellt wird, um an der Wärmequelle anfallende Wärmeenergie über den ersten Wärmetauscher an das Abwasser abzugeben. Insbesondere kann verhindert werden, daß zu Zeiten, in denen die Wärmequelle außer Betrieb ist, kühles Abwasser an dem ersten Wärmetauscher vorbeifließt, ohne erwärmt zu werden. Durch Stauen des Abwassers mittels der ersten Durchflußsteuereinrichtung kann das kühle Abwasser vorgehalten werden, um zu einem späteren Zeitpunkt mittels der Wärmequelle über den ersten Wärmetauscher erwärmt zu werden. Bevorzugt gibt die erste Durchflußsteuereinheit den Durchflußquerschnitt der Abwasserrohrleitung zumindest teilweise frei, wenn das aufgestaute Abwasser eine vorbestimmte Menge erreicht hat oder wenn das aufgestaute Abwasser mittels des ersten Wärmetauschers auf eine vorbestimmte Temperatur erwärmt wurde. Somit kann vorteilhafterweise sichergestellt werden, daß die Entwässerung mittels der Abwasserrohrleitung sichergestellt ist und daß die höchstmögliche Wärmeenergiemenge mittels des Abwassers transportiert werden kann.

Weiter vorzugsweise umfaßt die Wärmetauscheranordnung eine zweite Durchflußsteuereinrichtung, wobei die zweite Durchflußsteuereinrichtung stromabwärts des zweiten Wärmetauschers angeordnet ist. Dabei ist die Funktionsweise der zweiten Durchflußsteuereinrichtung analog zur Funktionsweise der ersten Durchflußsteuereinrichtung. Jedoch ermöglichst die zweite Durchflußsteuereinheit eine verbesserte Nutzung der in dem Abwasser enthaltenen Wärmeenergie mittels des zweiten Wärmetauschers. Durch ein Aufstauen des Abwassers in der Abwasserrohrleitung stromabwärts des zweiten Wärmetauschers mittels der zweiten Durchflußsteuereinrichtung kann dem zweiten Wärmetauscher eine vergrößerte Abwassermenge über eine verlängerte Kontaktzeit bereitgestellt werden. Dadurch kann die in dem Abwasser enthaltene Wärmeenergie dem Abwasser insbesondere so lange entzogen werden, bis eine vorbestimmte Abwassertemperatur erreicht bzw. unterschritten wird. Bevorzugt gibt die zweite Durchflußsteuereinrichtung den Durchflußquerschnitt der Abwasserrohrleitung zumindest teilweise frei, wenn das stromaufwärts gestaute Abwasser eine vorbestimmte Menge bzw. eine vorbestimmte Temperatur erreicht hat. Weiter bevorzugt ist die zweite Durchflußsteuereinrichtung unmittelbar stromabwärts des zweiten Wärmetauschers in der Abwasserrohrleitung angeordnet. Weiter bevorzugt kann die zweite Durchflußsteuereinheit weniger als 100 m, weiter bevorzugt weniger als 50 m und insbesondere weniger als 10 m von dem zweiten Wärmetauscher beabstandet in der Abwasserrohrleitung angeordnet sein.

Vorzugsweise umfaßt die Wärmetauscheranordnung eine dritte Durchflußsteuereinrichtung, wobei die dritte Durchflußsteuereinrichtung stromabwärts des dritten Wärmetauschers angeordnet ist. Die Wirkungen, die bevorzugten Ausführungsformen und die bevorzugte Anordnung der dritten Durchflußsteuereinrichtung entsprechen denen der zweiten Durchftußsteuereinrichtung.

Vorzugsweise umfaßt die Wärmetauscheranordnung eine erste Meßvorrichtung, welche den Pegel H₁ über dem ersten Wärmetauscher und/oder die Abwassertemperatur T_{W1} im Bereich des ersten Wärmetauschers erfaßt. Dabei kann die Erfassung des Pegel H₁ insbesondere die Messung des Pegelstandes bzw. der Abwasserhöhe in der Abwasserrohrleitung mittels Ultraschall oder mittels Wasserdruckmessung umfassen. Die Erfassung der Abwassertemperatur T_{W1} umfaßt insbesondere die Messung der Abwassertemperatur mittels eines Temperatursensors.

Weiter bevorzugt ist die erste Meßvorrichtung mit der ersten Durchflußsteuereinrichtung verbunden, so daß die erste Durchflußsteuereinrichtung aufgrund der von der ersten Meßeinrichtung erfaßten Daten gesteuert bzw. geregelt werden kann.

Vorzugsweise umfaßt die Wärmetauscheranordnung eine zweite Meßvorrichtung, welche den Pegel H₂ über dem zweiten Wärmetauscher und/oder die Abwassertemperatur T_{W2} im Bereich des zweiten Wärmetauschers erfaßt. Weiter vorzugsweise umfaßt die Wärmetauscheranordnung eine dritte Meßvorrichtung, welche den Pegel H₃ über dem dritten Wärmetauscher und/oder die Abwassertemperatur T_{W3} im Bereich des dritten Wärmetauschers erfaßt.

Die Erfassung der Pegel H₂ bzw. H₃ kann insbesondere die Messung des jeweiligen Pegelstandes bzw. der Abwasserhöhe in der Abwasserrohrleitung mittels Ultraschall oder mittels Wasserdruckmessung umfassen. Die Erfassung der jeweiligen Abwassertemperaturen T_{W2} bzw. T_{W3} kann insbesondere die Messung der Abwassertemperatur mittels eines Temperatursensors umfassen. Die zweite bzw. dritte Meßvorrichtung können mit der zugeordneten zweiten bzw. dritten Durchflußsteuereinrichtung verbunden sein, so daß die zweite bzw. die dritte Durchflußsteuereinrichtung aufgrund der von der zugeordneten Meßeinrichtung erfaßten Daten gesteuert bzw. geregelt werden können.

### Verfahren

Die vorliegende Erfindung betrifft ein Verfahren zum Transport von Wärmeenergie umfassend die folgenden Schritte:
- Bereitstellen eines warmen ersten Wärmetauschmediums;
- Zuführen des warmen ersten Wärmetauschmediums in bzw. über einen ersten Wärmetauscher, welcher in einer Abwasserrohrleitung mit einer Abwasserfließrichtung F angeordnet ist und mit dem Abwasser thermisch kontaktiert;
- Erwärmen des Abwassers mittels des ersten Wärmetauschers;
- Erwärmen eines zweiten Wärmetauschmediums in einem zweiten Wärmetauscher durch die Wärmeenergie des Abwassers, wobei der zweite Wärmetauscher entlang der Abwasserfließrichtung F von dem ersten Wärmetauscher beabstandet in der Abwasserrohrleitung angeordnet ist und wobei der zweite Wärmetauscher mit dem Abwasser thermisch kontaktiert,;
- Zuführen des erwärmten zweiten Wärmetauschmediums zu einer Wärmesenke;
- Abkühlen des zweiten Wärmetauschmediums mittels der Wärmesenke.

Vorteilhafterweise kann Wärmeenergie einer Wärmequelle, welche von der Wärmesenke beabstandet ist, in einfacher Weise zur Wärmesenke hin transportiert werden. Dadurch ist es vorteilhafterweise möglich, die Wärmeenergie von Wärmequellen nutzbar zu machen und vorhandenen Wärmesenken zur Verfügung zu stellen, die bisher nicht wirtschaftlich nutzbar waren. Beispielsweise kann Wärmeenergie, welche beim Kühlen von industriellen Anlagen anfällt, beispielsweise von stationären Maschinen wie Druckmaschinen, Werkzeugmaschinen, Kühlanlagen, chemischen Reaktoren oder ähnliches, und welche bislang als Abluft oder Abwasser in die Umwelt abgegeben wurde, zu Wärmesenken beziehungsweise zu Wärmeabnehmern transportieren werden, beispielsweise zu Wärmepumpen, welche Wohnhäuser mit Heizenergie versorgen. Da sowohl industrielle Anlagen, welche Abwärme produzieren, als auch Wohnsiedlungen, welche Wärme zum Heizen benötigen, an die Kanalisation beziehungsweise an eine Abwasserrohrleitung angeschlossen sind, ist es in einfacher und wirtschaftlicher Weise möglich, mit Hilfe des erfindungsgemäßen Verfahrens Wärmeenergie von der Wärmequelle über das Abwasser in einer Abwasserrohrleitung zu einer Wärmesenke zu transportieren. Die zur Durchführung des erfindungsgemäßen Verfahrens notwendige Wärmetauscheranordnung ist, wie oben beschrieben, ebenfalls in einfacher Art und Weise herzustellen. Dabei wird vorteilhafterweise bereits angefallenes Abwasser als Wärmeenergieträgermedium verwendet und es wird insbesondere kein weiteres von der Wärmequelle erwärmtes Abwasser in die Abwasserrohrleitung eingebracht, um die Wärmeenergie der Wärmequelle zur Wärmesenke zu transportieren.

Das Bereitstellen des warmen ersten Wärmetauschmediums kann ein Erwärmen des ersten Wärmetauschmediums mittels einer Wärmequelle umfassen, wobei das erwärmte erste Wärmetauschmedium zumindest teilweise dem ersten Wärmetauscher zugeführt wird.

Vorzugsweise umfaßt das Verfahren weiter die folgenden Schritte:
- Messen der Abwassertemperatur T₁ mittels eines ersten Temperatursensors, welcher stromabwärts des ersten Wärmetauschers in der Abwasserrohrleitung angeordnet ist;
- Unterbrechen oder Vermindern der Zufuhr des erwärmten ersten Wärmetauschmediums in den ersten Wärmetauscher, wenn die gemessene Abwassertemperatur T₁ einen vorbestimmten maximalen Wert T_{1,max} überschreitet.

Vorteilhafterweise überschreitet die Abwassertemperatur T₁ stromabwärts des ersten Wärmetauschers nicht einen vorbestimmten maximalen Wert T_{1,max}, wodurch vorteilhafterweise verhindert wird, daß die Verdunstungsrate des Abwassers aufgrund einer zu hohen Abwassertemperatur T₁ einen vorbestimmten Wert überschreitet. Die in einer Abwasserrohrleitung geführten Haushalts- und Industrieabwässer weisen in der Regel eine Abwassertemperatur zwischen etwa 8°C und etwa 20°C auf, wobei die Abwassertemperatur am Einleitungspunkt in die Abwasserrohrleitung in der Regel 35°C nicht überschreitet. Durch eine Regelung der die Abwassertemperatur T₁ stromabwärts des ersten Wärmetauschers wird vorteilhafterweise verhindert, daß eine zu starke Geruchsbildung aufgrund des erwärmten Abwassers auftritt. Weiter kann vorteilhafterweise die von der Wärmequelle an das Abwasser abgegebene Wärmeenergie, in Abhängigkeit von der Abwassermenge, geregelt werden. Die Abwassertemperatur T₁ stromabwärts liegt aufgrund der Wärmeenergieabgabe des ersten Wärmetauschers an das Abwasser vorzugsweise zwischen etwa 8°C und etwa 60°C. Die maximale Abwassertemperatur T_{1,max} stromabwärts des ersten Wärmetauschers liegt vorzugsweise zwischen etwa 20°C und etwa 60°C, weiter vorzugsweise zwischen etwa 25°C und etwa 40°C und insbesondere ungefähr 30°C.

Vorzugsweise umfaßt das Verfahren weiter die folgenden Schritte:
- Messen der Abwassertemperatur T₂ mittels eines zweiten Temperatursensors, welcher stromabwärts des zweiten Wärmetauschers in der Abwasserrohrleitung angeordnet ist;
- Unterbrechen oder Vermindern der Zufuhr des erwärmten ersten Wärmetauschmediums in den ersten Wärmetauscher, wenn die gemessene Abwassertemperatur T₂ einen vorbestimmten maximalen Wert T_{2,max} überschreitet.

Vorteilhafterweise wird verhindert, daß die Abwassertemperatur T₂ einen vorbestimmten maximalen Wert T_{2,max}, stromabwärts des zweiten Wärmetauschers überschreitet und schließlich in eine Kläranlage oder in ein Biotop gelangt. Vorteilhafterweise wird dadurch verhindert, daß eine Kläranlage beziehungsweise ein Biotop mit zu warmem Abwasser beaufschlagt wird, wodurch die Mikrofauna der Kläranlage beziehungsweise des Biotops beeinträchtigt werden könnte. Die maximale Abwassertemperatur T_{2,max} stromabwärts des zweiten Wärmetauschers beträgt vorzugsweise weniger als 35°C, weiter vorzugsweise weniger als 25°C und insbesondere ungefähr 12°C.

Vorzugsweise umfaßt das Verfahren weiter die folgenden Schritte:
- Messen der Abwassertemperatur T₂ mittels eines zweiten Temperatursensors, welcher stromabwärts des zweiten Wärmetauschers in der Abwasserrohrleitung angeordnet ist;
- Unterbrechen oder Vermindern der Zufuhr von kaltem zweiten Wärmetauschmedium in den zweiten Wärmetauscher, wenn die gemessene Abwassertemperatur T₂ einen vorbestimmten minimalen Wert T_{2,min} unterschreitet.

Vorteilhafterweise wird der Transport von Wärmeenergie aus dem Abwasser zur Wärmesenke unterbrochen beziehungsweise vermindert, wenn die Abwassertemperatur T₂ einen vorbestimmten minimalen Wert T_{2,min} unterschreitet, wodurch verhindert wird, daß eine Kläranlage beziehungsweise ein Biotop mit zu kaltem Wasser beaufschlagt wird. Dadurch wird vorteilhafterweise verhindert, daß die biologische Aktivität der Mikroorganismen innerhalb der Kläranlage beziehungsweise des Biotops aufgrund der geringen Abwassertemperatur verringert wird. Bevorzugt beträgt die minimale Abwassertemperatur T_{2,min} mehr als 8°C, bevorzugt etwa 25°C.

Vorzugsweise umfaßt das Verfahren den Schritt des Drosseln oder Stauens des Abwasserflusses durch die Abwasserrohrleitung im Bereich des ersten Wärmetauschers mittels der ersten Durchflußsteuereinheit, welche stromabwärts der ersten Wärmetauscher angeordnet ist. Vorteilhafterweise kann durch diesen Schritt kühles Abwasser in einer vorbestimmten Menge im Bereich des ersten Wärmetauschers bereitgestellt werden, so daß die Wärmequelle eine vorbestimmte minimale Wärmeenergiemenge mittels des ersten Wärmetauschers an das Abwasser abgeben kann. Beispielsweise kann dadurch die Abführung von Wärmeenergie, welche bei einem industriellen Prozeß anfällt, sichergestellt werden, so daß vorteilhafterweise die unterbrechungsfreie Durchführung des industriellen Prozesses sichergestellt ist. Weiter vorteilhafterweise kann das Abwasser im Bereich des ersten Wärmetauschers so lange gestaut sein, daß eine vorbestimmte Abwassertemperatur erreicht wird, so daß vorteilhafterweise die Effizienz des nachfolgenden Wärmetauschs am zweiten Wärmetauscher gesteigert werden kann. Insbesondere ist es nicht notwendig den Abwasserfluß mittels der ersten Durchflußsteuereinrichtung vollständig zu stauen, sondern es kann hinreichend sein, den Abwasserfluß auf eine vorbestimmte Abwasserfließmenge pro Zeiteinheit im Bereich des ersten Wärmetauschers zu reduzieren. Weiter bevorzugt kann die Drosselung oder das Stauen des Abwasserflusses in der Abwasserrohrleitung im Bereich des ersten Wärmetauschers temporär vollständig mittels der ersten Durchflußsteuereinrichtung aufgehoben sein. Insbesondere kann das im Bereich des ersten Wärmetauschers gestaute Abwasser in Form eines Spülschwalls durch ein schlagartiges Öffnen der Durchflußsteuereinrichtung entlang der Abwasserfließrichtung F in der Abwasserrohrleitung abfließen, so daß im Bereich des ersten Wärmetauschers sedimentierte Partikel entlang der Abwasserfließrichtung F in der Abwasserrohrleitung weiter transportiert werden. Vorteilhafterweise kann somit gleichzeitig eine Reinigung der Abwasserrohrleitung erfolgen.

Vorzugsweise umfaßt das Verfahren den Schritt des Öffnens der ersten Durchflußsteuereinrichtung, wenn das Abwasser einen vorbestimmten Pegel H₁ über dem ersten Wärmetauscher aufweist und/oder wenn das Abwasser eine vorbestimmte Abwassertemperatur T_{W1} im Bereich des ersten Wärmetauschers aufweist. Da der vordringliche Zweck einer Abwasserrohrleitung die Entwässerung ist, kann das Aufstauen des Abwassers in der Abwasserrohrleitung mittels der ersten Durchflußsteuereinrichtung aufgehoben werden, wenn ein vorbestimmter Pegel H₁ über dem ersten Wärmetauscher erreicht wird, so daß vorteilhafterweise verhindert wird, das Abwasser in der Abwasserrohrleitung übermäßig aufgestaut wird. Dadurch kann vorteilhafterweise eine planmäßige Entwässerung mittels der Abwasserrohrleitung und der ersten Durchflußsteuereinheit gewährleistet werden. Bevorzugt sollte das Abwasser im Bereich des ersten Wärmetauschers eine vorbestimmte Abwassertemperatur T_{W1} nicht überschreiten, da dann zum einen die Effizienz der Wärmeenergieabgabe von der Wärmequelle mittels des ersten Wärmetauschers an das Abwasser geringer wird und zum anderen aufgrund der erhöhten Abwassertemperatur Geruchsbelästigungen entstehen können. Deshalb kann die erste Durchflußsteuereinrichtung ein Abfließen des Abwassers entlang der Abwasserfließrichtung F in die Abwasserrohrleitung ermöglichen, wenn die vorbestimmte Abwassertemperatur T_{W1} im Bereich des ersten Wärmetauschers erreicht bzw. überschritten wird. Die Wahl der Abwassertemperatur T_{W1} erfolgt dabei in Abhängigkeit von der Effizienz es Wärmetauschs am ersten Wärmetauscher, der Effizienz des Wärmetauschs am zweiten Wärmetauscher, welcher stromabwärts des ersten Wärmetauschers angeordnet ist, des Abstands zwischen dem ersten und dem zweiten Wärmetauscher sowie der Wärmeverluste des Abwassers auf dem Weg zwischen dem ersten Wärmetauscher und dem zweiten Wärmetauscher sowie den örtlichen behördlichen Auflagen. Durch eine geeignete Wahl der Abwassertemperatur T_{W1} können der erste Wärmetauscher und der zweite Wärmetauscher in einem für die gegebenen Umstände optimalen Bereich betrieben werden, so daß die von der Wärmequelle über den ersten Wärmetauscher, das Abwasser, den zweiten Wärmetauscher zur Wärmesenke transportierbare Wärmeenergiemenge maximal ist.

Vorteilhafterweise umfaßt das Verfahren die folgenden Schritte:
- Erfassen der durch die Wärmesenke über den zweiten Wärmetauscher entnommenen thermischen Energie E₁;
- Erfassen der durch die zweite Wärmesenke über den dritten Wärmetauscher entnommenen thermischen Energie E₂;
- Steuerung der zu zweiten Wärmetauscher und der zum dritten Wärmetauscher fließenden Abwassermenge, so daß der Wärmesenke eine vorbestimmte Menge thermischer Energie W₁ über den zweiten Wärmetauscher bereitgestellt werden kann und der zweiten Wärmesenke eine vorbestimmte Menge thermischer Energie W₂ über den dritten Wärmetauscher bereitgestellt werden kann.

Vorteilhafterweise kann die Abwassermenge, welche dem zweiten Wärmetauscher und dem dritten Wärmetauscher zur Verfügung gestellt wird, in Abhängigkeit von der an der zugehörigen Wärmesenke benötigten thermischen Energie gesteuert bzw. geregelt werden. Daher kann dem zweiten Wärmetauscher eine erhöhte Abwassermenge bereitgestellt werden, wenn die zugeordnete Wärmesenke eine erhöhte Menge an thermischer Energie E₁ entnimmt.

Besonders bevorzugt umfaßt das Verfahren den Schritt des Erfassens der durch die Wärmequelle über den ersten Wärmetauscher abgegebenen thermischen Energie E_{A1}. Vorteilhafterweise kann somit die zur Verfügung stellbare Energie E_{A1} im Verhältnis zu der benötigten Energie E₁+E₂ gesetzt werden. Für den Fall, daß die zur Verfügung stellbare thermische Energie E_{A1} kleiner ist als die benötigte thermische Energie E₁+E₂ kann eine Aufteilung der thermischen Energie E_{A1} nach einer vorbestimmten Quote auf den zweiten Wärmetauscher und den dritten Wärmetauscher erfolgen, so daß der Wärmesenke und der zweiten Wärmesenke jeweils ein Bruchteil der benötigten thermischen Energie zur Verfügung gestellt werden kann. Bevorzugt ist der Bruchteil der zur Verfügung gestellten thermischen Energie für die beiden Wärmesenken gleich. Die fehlende thermische Energie muß dann am Ort der jeweiligen Wärmesenken durch andere Maßnahmen erzeugt und zur Verfügung gestellt werden. Alternativ kann die Steuerung der zum zweiten Wärmetauscher und der zum dritten Wärmetauscher fließenden Abwassermenge so gesteuert werden, daß der Wärmesenke über den zweiten Wärmetauscher die entnommene thermische Energie E₁ im wesentlichen vollständig zur Verfügung gestellt wird oder daß der zweiten Wärmesenke über den dritten Wärmetauscher die entnommene thermische Energie E₂ im wesentlichen vollständig zur Verfügung gestellt wird. Dies hätte dann zur Folge, daß der verbleibenden Wärmesenke ein geringerer Bruchteil oder keine thermische Energie zur Verfügung gestellt werden kann.

Da bevorzugterweise eine bestimmte Menge warmen Abwassers im Bereich des zweiten Wärmetauschers oder im Bereich des dritten Wärmetauschers mittels einer zugeordneten Durchflußsteuereinrichtung gestaut werden kann, wobei die in dem gestauten Abwasser enthaltene thermische Energie ausreichend sein kann, die zugeordnete Wärmesenke mit thermischer Energie zu versorgen, umfaßt das Verfahren bevorzugt den Schritt des Bestimmens der thermischen Energie E_{A2}, welche sich in dem über dem zweiten Wärmetauscher befindlichen Abwasser befindet und/oder des Bestimmens der thermischen Energie E_{A3}, welche sich in dem über dem dritten Wärmetauscher befindlichen Abwasser befindet. Somit kann vorteilhafterweise die der Wärmesenke und der zweiten Wärmesenke zur Verfügung stellbare thermische Energie verbessert abgeschätzt werden.

Die vorangehende Beschreibung der Aspekte der Erfindung ist nicht auf die jeweiligen Aspekte beschränkt. Insbesondere gelten die Ausführungen in Hinsicht auf die Wärmetauscheranordnung auch für das Verfahren zum Transport von Wärmeenergie und umgekehrt.

### Figurenbeschreibung

Nachfolgend werden bevorzugte Ausführungsformen der vorliegenden Erfindung anhand einer begleitenden Figuren beispielhaft beschrieben. Es zeigen:
- Figur 1: eine perspektivische Ansicht einer Ausführungsform einer Wärmetauscheranordnung;
- Figur 2: eine perspektivische Ansicht einer weiteren Ausführungsform einer Wärmetauscheranordnung.

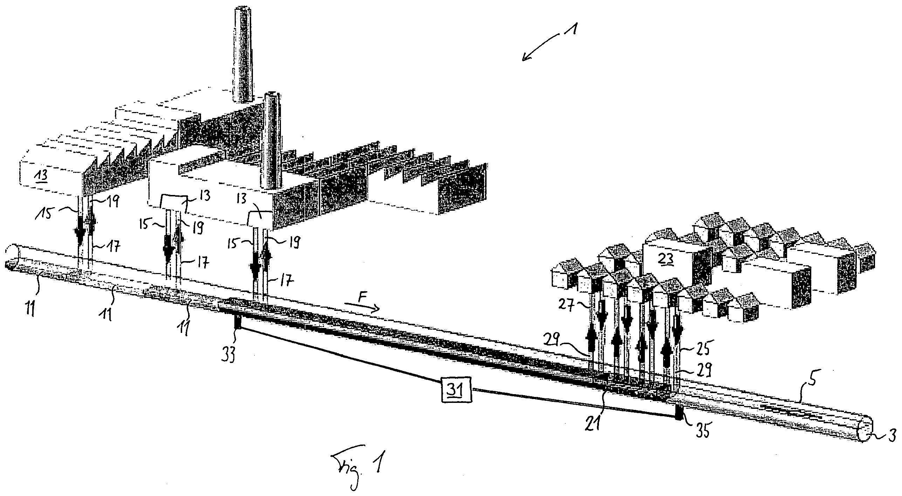

Figur 1 zeigt eine perspektivische Ansicht einer exemplarischen Wärmetauscheranordnung 1. Die Wärmetauscheranordnung 1 umfaßt drei erste Wärmetauscher 11, welche jeweils einen Warmwasservorlauf 15 und einen Kaltwasserrücklauf 17 aufweisen. Es versteht sich, daß die Wärmetauscheranordnung 1 auch einen, zwei, vier, fünf oder mehr aneinander liegende oder voneinander beabstandete erste Wärmetauscher 11 aufweisen kann. Der erste Wärmetauscher 11, der Warmwasservorlauf 15 und der Kaltwasserrücklauf 17 sind mit einem ersten Wärmetauschmedium 19 gefüllt. Das erste Wärmetauschmedium 19 steht unmittelbar oder mittelbar in thermischem Kontakt mit einer Wärmequelle 13. Eine solche Wärmequelle 13 kann beispielsweise eine gekühlte, industriell benutzte Maschine sein, wie beispielsweise eine Werkzeugmaschine, eine Druckmaschine, eine Anlage zur Krafterzeugung, oder ähnliches. Weiter beispielsweise kann die Wärmequelle auch einen chemischen Reaktor umfassen, wie beispielsweise Vorrichtungen zum Kühlen einer exothermen chemischen Reaktion. Weiter kann die Wärmequelle auch Teil eines thermodynamischen Kreislaufs beziehungsweise eines Wärmetauschers sein, wie zum Beispiel die Kühlrippen eines Kühlaggregates oder einer Klimaanlage.

Aufgrund des thermischen Kontaktes der Wärmequelle 13 mit dem ersten Wärmetauschmedium 19 wird Wärmeenergie von der Wärmequelle 13 zum ersten Wärmetauschmedium 19 übertragen, das heißt, das erste Wärmetauschmedium 19 wird durch die Wärmequelle 13 erwärmt. Das erste Wärmetauschmedium 19 wird beispielsweise mittels einer Umwälzpumpe (nicht gezeigt) über den Warmwasservorlauf 15 dem ersten Wärmetauscher 11 zugeführt. Der erste Wärmetauscher 11 ist in eine Abwasserrohrleitung 5 eingebracht, so daß der erste Wärmetauscher 11 das in der Abwasserrohrleitung 5 fließende Abwasser 3 thermisch kontaktiert. Beispielsweise kann der erste Wärmetauscher 11 in eine schon bestehende Abwasserrohrleitung 5 derart eingebracht sein, daß der erste Wärmetauscher 11 lediglich auf der Sohle der Abwasserrohrleitung 5 aufliegt oder alternativ durch Einbetonieren mit der Abwasserrohrleitung 5 fest verbunden ist. Alternativ kann die Abwasserrohrleitung 5 eine Wandung aufweisen, welche als Wärmetauscher ausgebildet ist. Aufgrund des thermischen Kontaktes des ersten Wärmetauschmediums 19 über den ersten Wärmetauscher 11 mit dem Abwasser 3, wird die Wärmeenergie des ersten Wärmetauschmediums 19 teilweise auf das Abwasser 3 übertragen, das heißt, das Abwasser 3 wird durch das erwärmte erste Wärmetauschmedium im Bereich des ersten Wärmetauschers 11 erwärmt. Gleichzeitig wird das erste Wärmetauschmedium 19 durch die Abgabe der Wärmeenergie an das Abwasser 3 im ersten Wärmetauscher 11 abgekühlt. Das abgekühlte Wärmetauschmedium 19 wird über den Kaltwasserrücklauf 17 zurück zur Wärmequelle 13 geführt.

Das erwärmte Abwasser 3 fließt, in Abhängigkeit von dem Gefälle der Abwasserrohrleitung 5, entlang einer Abwasserfließrichtung F durch die Abwasserrohrleitung 5. Nach einem Fließweg von einigen hundert Metern bis einigen Kilometern erreicht das Abwasser 3 zumindest einen zweiten Wärmetauscher 21. Der zweite Wärmetauscher 21 ist derart in der Abwasserrohrleitung 5 eingebracht, daß der zweite Wärmetauscher 21 in thermischem Kontakt mit dem Abwasser 3 steht. In dem zweiten Wärmetauscher 21 befindet sich ein zweites Wärmetauschmedium 29, welches durch das Abwasser 3 erwärmt wird. Der zweite Wärmetauscher 21 ist mittels eines Warmwasserrücklaufs 27 und eines Kaltwasservorlaufs 25 mit einer Wärmesenke 23 hydraulisch verbunden. Das durch das Abwasser 3 erwärmte zweite Wärmetauschmedium 29 wird vorzugsweise mittels einer Umwälzpumpe (nicht gezeigt) über den Warmwasserrücklauf 27 der Wärmesenke 23 zugeführt. Die Wärmesenke 23 ist in thermischem Kontakt mit dem zweiten Wärmetauschmedium 29, so daß die in dem zweiten Wärmetauschmedium 29 gespeicherte Wärmeenergie teilweise diesem durch die Wärmesenke 23 entnommen wird. Die Wärmesenke 23 kann beispielsweise Teil einer Wärmepumpe zur Beheizung von Wohnungen sein. Abhängig von der Temperatur des zweiten Wärmetauschmediums 29 im Warmwasserrücklauf 27 kann die Wärmesenke 23 auch als Heizkörper für Zuluft oder als Fußbodenheizung ausgebildet sein.

Aufgrund der Entnahme von Wärmeenergie aus dem zweiten Wärmetauschmedium 29 in der Wärmesenke 23 wird das zweite Wärmetauschmedium 29 abgekühlt. Das abgekühlte zweite Wärmetauschmedium 29 wird über den Kaltwasservorlauf 25 zurück zum zweiten Wärmetauscher 21 geführt, um dort erneut von dem Abwasser 3 erwärmt zu werden.

Vorzugsweise umfaßt die Wärmetauscheranordnung 1 einen ersten Temperatursensor 33, welcher stromabwärts von dem ersten Wärmetauscher 11 angeordnet ist. Der erste Temperatursensor 33 erfaßt damit die Temperatur T₁ des Abwassers 3, welches durch den ersten Wärmetauscher 11 erwärmt worden ist. Um die Verdampfungsrate des Abwasser 3 zu begrenzen, beziehungsweise um Geruchsbelästigungen zu vermindern, überschreitet die Abwassertemperatur T₁ vorzugsweise nicht einen vorbestimmten maximalen Wert T_{1,max}, welcher bevorzugt etwa 60°C, weiter bevorzugt 50°C und insbesondere bevorzugt 40°C, beträgt. Um die Abwassertemperatur T₁ auf den vorbestimmten maximalen Wert T_{1,max} zu begrenzen, ist der erste Temperatursensor 33 mit einer Regeleinheit 31 verbunden. Die Regeleinheit 31 unterbricht beziehungsweise vermindert die Zufuhr des erwärmten ersten Wärmetauschmediums 19 zu dem ersten Wärmetauscher 11 für den Fall, daß die gemessene Abwassertemperatur T₁ den vorbestimmten maximalen Wert T_{1,max} überschreitet.

Weiter vorzugsweise umfaßt die Wärmetauscheranordnung 1 einen zweiten Temperatursensor 35, der stromabwärts des zweiten Wärmetauschers 21 angeordnet ist. Der zweite Temperatursensor 35 erfaßt die Temperatur T₂ des Abwassers 3 in der Abwasserrohrleitung 5, nachdem dem Abwasser 3 Wärmeenergie mittels des zweiten Wärmetauschers 21 entzogen wurde. Da das Abwasser 3 in der Regel mittels der Abwasserrohrleitung 5 einer Kläranlage (nicht gezeigt) zugeführt wird, sollte die Abwassertemperatur T₂ des Abwassers 3 in der Abwasserrohrleitung 5 vorzugsweise in einem Bereich zwischen etwa 8°C und etwa 35°C, weiter vorzugsweise in einem Bereich zwischen etwa 10°C und etwa 30°C und insbesondere etwa 25°C liegen, damit eine biologische Reinigung des Abwassers 3 durch Mikroorganismen in der Kläranlage erfolgen kann. Eine zu geringe Abwassertemperatur T₂ würde zu einer verminderten Aktivität der Mikroorganismen führen, während eine zu hohe Abwassertemperatur T₂ zu einem Absterben der Mikroorganismen in der Kläranlage führt.

Der zweite Temperatursensor 35 ist vorzugsweise mit der Regeleinheit 31 verbunden, welche die Zufuhr des erwärmten ersten Wärmetauschmediums 19 zu dem ersten Wärmetauscher 11 unterbricht beziehungsweise vermindert, wenn die gemessene Abwassertemperatur T₂ einen vorbestimmten maximalen Wert T_{2,max} überschreitet. Somit wird vorteilhafterweise verhindert, daß zu warmes Abwasser 3 der nachgeschalteten Kläranlage zugeführt wird. Weiter vorzugsweise wird der Wärmeentzug durch den zweiten Wärmetauscher 21 aus dem Abwasser 3 unterbrochen bzw. vermindert, beispielsweise durch Unterbrechen bzw. Verminderung der Zufuhr von kaltem zweiten Wärmetauschmedium 29 zu dem zweiten Wärmetauscher 21, wenn die gemessene Abwassertemperatur T₂ einen vorbestimmten minimalen Wert T_{2,min} unterschreitet. Das Unterbrechen bzw.

Vermindern des Wärmeentzugs aus dem Abwasser 3 mittels des zweiten Wärmetauschers 21 kann ebenfalls durch die Regeleinheit 31 erfolgen, beispielsweise mittels eines Regelventils. Alternativ kann eine weitere Regeleinheit (nicht gezeigt) vorgesehen sein, welche mit dem zweiten Temperatursensor 35 verbunden ist und welche die Unterbrechung bzw. die Verminderung des Wärmeentzugs regelt. Somit wird vorteilhafterweise verhindert, daß die Kläranlage mit zu kaltem Abwasser 3 beaufschlagt wird.

Es versteht sich, daß ein oder mehrere erste Wärmetauscher 11 voneinander beabstandet in der Abwasserrohrleitung 5 angeordnet sein können oder daß ein oder mehrere erste Wärmetauscher 11 miteinander verbunden in der Abwasserrohrleitung 5 angeordnet sein können, wobei die Verbindung von mehreren ersten Wärmetauschern 11 vorzugsweise durch zugfeste und druckdichte Anschlußkonfigurationen an den Endbereichen der einzelnen Wärmetauscher erfolgen kann. Analog können ein oder mehrere zweite Wärmetauscher 21 voneinander beabstandet oder miteinander verbunden in der Abwasserrohrleitung 5 angeordnet sein.

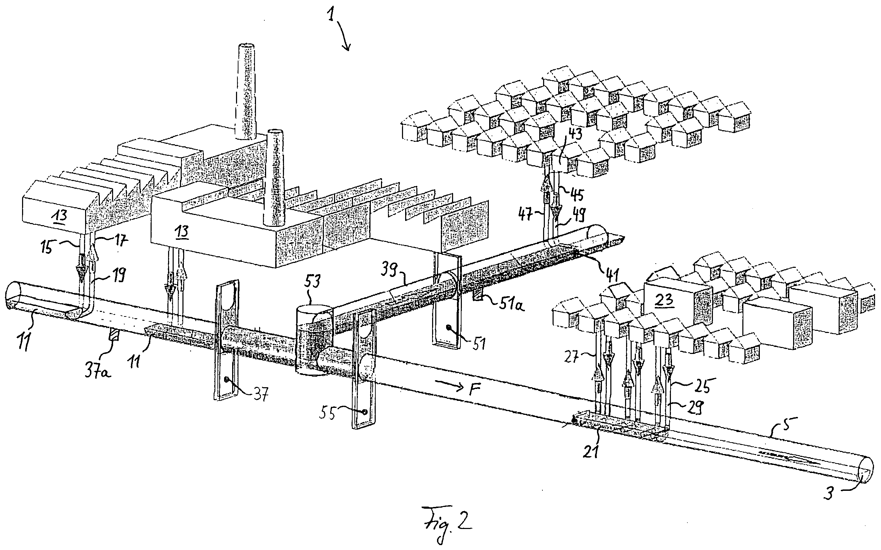

Figur 2 zeigt eine perspektivische Ansicht einer anderen exemplarischen Wärmetauscheranordnung 1. Die Wärmetauscheranordnung 1 umfaßt zwei erste Wärmetauscher 11, welche jeweils einen Warmwasservorlauf 15 und einen Kaltwasserrücklauf 17 aufweisen. Es versteht sich, daß die Wärmetauscheranordnung 1 auch einen, 3, 4, 5 oder mehr aneinander liegende oder voneinander beabstandete erste Wärmetauscher aufweisen kann. Entsprechend zu der in Fig. 1 gezeigten Ausführungsform wird dem ersten Wärmetauscher 11 über den Warmwasservorlauf 15 ein warmes Wärmetauschmedium 19 bereitgestellt, wobei das erste Wärmetauschmedium 19 mittels der Wärmequelle 13 erwärmt wird. Der erste Wärmetauscher 11 ist derart in die Abwasserrohrleitung 5 eingebracht, so daß der erste Wärmetauscher 11 das in der Abwasserrohrleitung 5 fließende Abwasser 3 thermisch kontaktiert. Die Einbringung des Wärmetauschers 11 in die Abwasserrohrleitung 5 kann wie zur Fig. 1 beschrieben erfolgen. Mittels des Wärmetauschers 11 wird das Abwasser 3 erwärmt und das abgekühlte Wärmetauschmedium 19 wird über den Kaltwasserrücklauf 17 zurück zur Wärmequelle 13 geführt.

Stromabwärts des ersten Wärmetauschers 11 ist eine erste Durchflußsteuereinrichtung 37 angeordnet, welche die entlang der Abwasserfließrichtung F fließende Abwassermenge in der Abwasserrohrleitung 5 steuern bzw. regeln kann. Insbesondere kann mittels der Durchflußsteuereinrichtung 37 das Abwasser stromaufwärts der Durchflußsteuereinrichtung 37 gestaut werden, so daß ein erhöhtes Volumen an Abwasser im Bereich des ersten Wärmetauschers 11 bereitgestellt werden kann. Vorteilhafterweise wird dadurch die Menge an thermischer Energie E_{A1} erhöht, welche an das Abwasser 3 abgegeben werden kann. Die gezeigte Wärmetauscheranordnung 1 umfaßt weiter eine erste Meßvorrichtung 37a, welche den Pegel H₁ über den ersten Wärmetauscher 11 und/oder die Abwassertemperatur T_{W1} im Bereich des ersten Wärmetauschers 11 erfaßt. Die erste Meßvorrichtung 37a ist mit der ersten Durchflußsteuereinheit 37 verbunden, so daß die erste Durchflußsteuereinrichtung 37 geöffnet werden kann, wenn das Abwasser 3 einen vorbestimmten Pegel H₁ über dem ersten Wärmetauscher 11 aufweist und/oder wenn das Abwasser 3 eine vorbestimmte Abwassertemperatur T_{W1} im Bereich des ersten Wärmetauschers 11 aufweist.

Das erwärmte Abwasser 3 fließt, in Abhängigkeit von dem Gefälle der Abwasserrohrleitung 5, entlang der Abwasserfließrichtung F durch die Abwasserrohrleitung 5. Stromabwärts des ersten Wärmetauschers 11 ist zumindest ein zweiter Wärmetauscher 21 angeordnet. Der zweite Wärmetauscher 21 ist derart in der Abwasserrohrleitung 5 eingebracht, daß der zweite Wärmetauscher 21 in thermischem Kontakt mit dem Abwasser 3 steht. Dem zweiten Wärmetauscher 21 wird ein kühles Wärmetauschmedium 29 über einen Kaltwasservorlauf 25 bereitgestellt. Das Wärmetauschmedium 29 wird mittels des Abwassers 3 erwärmt und über einen Warmwasserrücklauf 27 einer Wärmesenke 23 zugeführt, welche dem zweiten Wärmetauschmedium 29 die gespeicherte Wärmeenergie zumindest teilweise entnimmt. Das abgekühlte Wärmetauschmedium 29 wird dann über den Kaltwasservorlauf 25 dem zweiten Wärmetauscher 21 wiederum zugeführt.

Die in der Fig. 2 gezeigte Wärmetauscheranordnung 1 umfaßt weiterhin eine zweite Abwasserrohrleitung 39, welche mit der Abwasserrohrleitung 5 hydraulisch verbunden ist. Die hydraulische Verbindung der Abwasserrohrleitung 5 und der zweiten Abwasserrohrleitung 39 erfolgt mittels eines Verbindungsschachtes 53, welcher zwischen dem ersten Wärmetauscher 11 und dem zweiten Wärmetauscher 21 in der Abwasserrohrleitung 5 angeordnet ist. In der zweiten Abwasserrohrleitung 39 ist ein dritter Wärmetauscher 41 angeordnet, welcher ausgelegt ist, das in der zweiten Abwasserrohrleitung 39 fließende Abwasser 3 thermisch zu kontaktieren. Entsprechend zu dem zweiten Wärmetauscher 21 wird dem dritten Wärmetauscher 41 über einen Kaltwasservorlauf 45 ein kühles Wärmetauschmedium 49, insbesondere kühles Wasser 49, bereitgestellt, wobei das kühle Wärmetauschmedium 49 über den dritten Wärmetauscher 41 mittels des Abwassers 3 erwärmt wird. Das erwärmte dritte Wärmetauschmedium 49 wird vorzugsweise mittels einer Umwälzpumpe (nicht gezeigt) über einen Warmwasserrücklauf 47 der zweiten Wärmesenke 43 zugeführt. Die zweite Wärmesenke 43 ist wiederum im thermischen Kontakt mit dem dritten Wärmetauschmedium 49, so daß die in dem dritten Wärmetauschmedium 49 gespeicherte Wärmeenergie teilweise diesem durch die zweite Wärmesenke 43 entnommen wird. Das dadurch abgekühlte dritte Wärmetauschmedium 49 wird über den Kaltwasservorlauf 45 zurück zum dritten Wärmetauscher 41 geführt, um dort erneut von dem Abwasser 3 erwärmt zu werden.

Die in der Fig. 2 gezeigte zweite Abwasserrohrleitung 39 weist ein derartiges Gefälle auf, daß die Abwasserfließrichtung in der zweiten Abwasserrohrleitung 39 von dem dritten Wärmetauscher 41 zur Abwasserrohrleitung 5 hin orientiert ist. Um den dritten Wärmetauscher 41 mit Abwasser 3 zu versorgen, welches von dem ersten Wärmetauscher 11 erwärmt worden ist, ist eine Sperrvorrichtung 55 stromabwärts des Schachtes 53 in der Abwasserrohrleitung 5 angeordnet. Durch zumindest teilweises Schließen der Sperrvorrichtung 55 kann aus Richtung des ersten Wärmetauscher 11 kommendes Abwasser 3 zu einem vorbestimmbaren Anteil derart gestaut werden, so daß das Abwasser über den Schacht 53 entgegen dem Gefälle der zweiten Abwasserrohrleitung 41 aufsteigt, um zu dem dritten Wärmetauscher 41 zu fließen. Bevorzugt befindet sich der erste Wärmetauscher 11 auf einem höheren Niveau über Normalnull als der dritte Wärmetauscher 41, so daß das Abwasser 3 lediglich aufgrund der Schwerkraft von dem ersten Wärmetauscher 11 zu dem dritten Wärmetauscher 41 fließt. Alternativ kann ein Abwasserhebewerk mit der Abwasserrohrleitung 5 verbunden sein, um das Abwasser auf ein höheres Niveau zu heben, so daß das Abwasser entgegen dem Gefälle der zweiten Abwasserrohrleitung 39 in Richtung des dritten Wärmetauschers 41 fließt.

Um das zum dritten Wärmetauscher 41 geflossene Abwasser 3 im Bereich des dritten Wärmetauschers 41 zu halten, kann die Wärmetauscheranordnung 1 eine dritte Durchflußsteuereinrichtung 51 umfassen, welche den Abwasserfluß durch die zweite Abwasserrohrleitung 39 im Bereich des dritten Wärmetauschers 41 drosselt bzw. staut. Dadurch wird vorteilhafterweise die Kontaktzeit des Abwassers 3 mit dem dritten Wärmetauscher 41 verlängert, so daß dem Abwasser 3 vorteilhafterweise eine erhöhte Menge thermischer Energie entzogen werden kann. Bevorzugt umfaßt die Wärmetauscheranordnung 1 eine dritte Meßvorrichtung 51a, welche den Pegel H₃ über den dritten Wärmetauscher 41 und/oder die Abwassertemperatur T_{W3} im Bereich des dritten Wärmetauschers 41 erfaßt. Weiter bevorzugt ist die dritte Meßvorrichtung 51a mit der dritten Durchflußsteuereinrichtung 51 verbunden, so daß die dritte Durchflußsteuereinheit 51 zumindest teilweise öffnet, wenn das Abwasser 3 einen vorbestimmten Pegel H₃ über den dritten Wärmetauscher 41 aufweist und/oder wenn das Abwasser 3 eine vorbestimmte Abwassertemperatur T_{W3} im Bereich des dritten Wärmetauschers 41 erreicht.

### Bezugszeichenliste

- 1: Wärmetauscheranordnung
- 3: Abwasser
- 5: Abwasserrohrleitung
- 11: erster Wärmetauscher
- 13: Wärmequelle
- 15: Warmwasservorlauf
- 17: Kaltwasserrücklauf
- 19: erstes Wärmetauschmedium
- 21: zweiter Wärmetauscher
- 23: Wärmesenke
- 25: Kaltwasservorlauf
- 27: Warmwasserrücklauf
- 29: zweites Wärmetauschmedium
- 31: Regeleinheit
- 33: erster Temperatursensor
- 35: zweiter Temperatursensor
- 37: erste Durchflußsteuereinrichtung
- 39: zweite Abwasserrohrleitung
- 41: dritter Wärmetauscher
- 43: zweite Wärmesenke
- 45: Kaltwasservorlauf
- 47: Warmwasserrücklauf
- 49: drittes Wärmetauschmedium
- 51: dritte Durchflußsteuereinrichtung
- 37a: erste Pegelmeßvorrichtung
- 51a: dritte Pegelmeßvorrichtung
- 53: Verbindungsschacht
- 55: Sperrvorrichtung
- F: Abwasserfließrichtung

## Patentansprüche

1. Verfahren zum Transport von Wärmeenergie umfassend die folgenden Schritte:
- Bereitstellen eines ersten warmen Wärmetauschmediums (19);
- Zuführen des warmen ersten Wärmetauschmediums (19) in bzw. über einen ersten Wärmetauscher (11), welcher in einer Abwasserrohrleitung (5) mit einer Abwasserfließrichtung F angeordnet ist und mit dem Abwasser (3) thermisch kontaktiert;
- Erwärmen des Abwassers (3) mittels des ersten Wärmetauschers (11);
- Erwärmen eines zweiten Wärmetauschmediums (29) in einem bzw. über einen zweiten Wärmetauscher (21) durch die Wärmeenergie des Abwassers (3), wobei der zweite Wärmetauscher (21) entlang der Abwasserfließrichtung F von dem ersten Wärmetauscher (11) beabstandet in der Abwasserrohrleitung (5) angeordnet ist und wobei der zweite Wärmetauscher (21) mit dem Abwasser (3) thermisch kontaktiert;
- Zuführen des erwärmten zweiten Wärmetauschmediums (29) zu einer Wärmesenke (23); und
- Abkühlen des zweiten Wärmetauschmediums (29) mittels der Wärmesenke (23).

2. Verfahren nach Anspruch 1 weiter umfassend die folgenden Schritte:
- Messen der Abwassertemperatur T₁ mittels eines ersten Temperatursensors (33), welcher stromabwärts des ersten Wärmetauschers (11) in der Abwasserrohrleitung (5) angeordnet ist; und
- Unterbrechen oder Vermindern der Zufuhr des erwärmten ersten Wärmetauschmediums (19) in den ersten Wärmetauscher (11), wenn die gemessene Abwassertemperatur T₁ einen vorbestimmten maximalen Wert T_{1,max} überschreitet.

3. Verfahren nach Anspruch 1 oder 2 weiter umfassend die folgenden Schritte:
- Messen der Abwassertemperatur T₂ mittels eines zweiten Temperatursensors (35), welcher stromabwärts des zweiten Wärmetauschers (21) in der Abwasserrohrleitung (5) angeordnet ist; und
- Unterbrechen oder Vermindern der Zufuhr des erwärmten ersten Wärmetauschmediums (19) in den ersten Wärmetauscher (11), wenn die gemessene Abwassertemperatur T₂ einen vorbestimmten maximalen Wert T_{2,max} überschreitet.

4. Verfahren nach einem der Ansprüche 1 bis 3 weiter umfassend die folgenden Schritte:
- Messen der Abwassertemperatur T₂ mittels eines zweiten Temperatursensors (35), welcher stromabwärts des zweiten Wärmetauschers (21) in der Abwasserrohrleitung (5) angeordnet ist; und
- Unterbrechen oder Vermindern der Zufuhr von kaltem zweiten Wärmetauschmedium (29) in den zweiten Wärmetauscher (21), wenn die gemessene Abwassertemperatur T₂ einen vorbestimmten minimalen Wert T_{2,min} unterschreitet.

5. Verfahren nach einem der Ansprüche 1 bis 4 weiter umfassend die folgenden Schritte:
- Drosseln oder Stauen des Abwasserflusses durch die Abwasserrohrleitung (5) im Bereich des ersten Wärmetauschers (11) mittels einer ersten Durchflußsteuereinrichtung (37) und/oder
- Drosseln oder Stauen des Abwasserflusses durch die Abwasserrohrleitung (5) im Bereich des zweiten Wärmetauschers (21) mittels einer zweiten Durchflußsteuereinrichtung und/oder
- Drosseln oder Stauen des Abwasserflusses durch eine zweite Abwasserrohrleitung (39) im Bereich eines dritten Wärmetauschers (41) mittels einer dritten Durchflußsteuereinrichtung (51).

6. Verfahren nach Anspruch 5 weiter umfassend die folgenden Schritte:
- Öffnen der ersten Durchflußsteuereinrichtung (37), wenn das Abwasser einen vorbestimmten Pegel H₁ über dem ersten Wärmetauscher (11) aufweist und/oder wenn das Abwasser eine vorbestimmte Abwassertemperatur T_{w1} im Bereich des ersten Wärmetauschers (11) aufweist, und/oder
- Öffnen der zweiten Durchflußsteuereinrichtung, wenn das Abwasser einen vorbestimmten Pegel H₂ über dem zweiten Wärmetauscher (21) aufweist und/oder wenn das Abwasser eine vorbestimmte Abwassertemperatur T_{w2} im Bereich des zweiten Wärmetauschers (21) aufweist, und/oder
- Öffnen der dritten Durchflußsteuereinrichtung (51), wenn das Abwasser einen vorbestimmten Pegel H₃ über dem dritten Wärmetauscher (41) aufweist und/oder wenn das Abwasser eine vorbestimmte Abwassertemperatur T_{w3} im Bereich des dritten Wärmetauschers (41) aufweist.

7. Verfahren nach einem der Ansprüche 1 bis 6 weiter umfassend die folgenden Schritte:
- Erfassen der durch die Wärmesenke (23) über den zweiten Wärmetauscher (21) entnommenen thermischen Energie E₁;
- Erfassen der durch eine zweite Wärmesenke (43) über den dritten Wärmetauscher (41) entnommenen thermischen Energie E₂; und
- Steuerung der zum zweiten Wärmetauscher (21) und der zum dritten Wärmetauscher (41) fließenden Abwassermenge, so daß der Wärmesenke (23) eine vorbestimmte Menge thermischer Energie W₁ über den zweiten Wärmetauscher (21) bereitgestellt werden kann und der zweiten Wärmesenke (43) eine vorbestimmte Menge thermischer Energie W₂ über den dritten Wärmetauscher (41) bereitgestellt werden kann.

## Claims

1. A method for transporting thermal energy, comprising the following steps:
- providing a hot first heat exchange medium (19);
- supplying the hot first heat exchange medium (19) into or via a first heat exchanger (11), which is arranged in a sewage pipeline (5) with a sewage flowing direction F and thermally contacts the sewage (3);
- heating the sewage (3) by means of the first heat exchanger;
- heating a second heat exchange medium (29) in or via a second heat exchanger (21) by the thermal energy of the sewage (3), wherein the second heat exchanger (21) is arranged along the sewage flowing direction F in a manner spaced from the first heat exchanger (11) in the sewage pipeline (5), and wherein the second heat exchanger thermally contacts the sewage (3);
- supplying the heated second heat exchange medium (29) to a heat sink (23);
- cooling the second heat exchange medium (29) by means of the heat sink (23).

2. The method according to claim 1, further comprising the following steps:
- measuring the sewage temperature T₁ by means of a first temperature sensor (33) arranged downstream of the first heat exchanger (11) in the sewage pipeline (5);
- interrupting or reducing the supply of the heated first heat exchange medium (19) into the first heat exchanger (11) when the measured sewage temperature T₁ exceeds a predetermined maximum value T_{1,max}.

3. The method according to claim 1 or 2, further comprising the following steps:
- measuring the sewage temperature T₂ by means of a second temperature sensor (35) arranged downstream of the second heat exchanger (21) in the sewage pipeline (5);
- interrupting or reducing the supply of the heated first heat exchange medium (19) into the first heat exchanger (11) when the measured sewage temperature T₂ exceeds a predetermined maximum value T_{2,max}.

4. The method according to one of claims 1 to 3, further comprising the following steps:
- measuring the sewage temperature T₂ by means of a second temperature sensor (35) arranged downstream of the second heat exchanger (21) in the sewage pipeline (5);
- interrupting or reducing the supply of a cold second heat exchange medium (29) into the second heat exchanger (21) when the measured sewage temperature T₂ falls below a predetermined minimum value T_{2,min}.

5. The method according to one of claims 1 to 4, further comprising the following steps:
- throttling or damming the sewage flow through the sewage pipeline (5) in the area of the first heat exchanger (11) by means of a first flow control device (37), and/or
- throttling or damming the sewage flow through the sewage pipeline (5) in the area of the second heat exchanger (21) by means of a second flow control device, and/or
- throttling or damming the sewage flow through a second sewage pipeline (39) in the area of a third heat exchanger (41) by means of a third flow control device (51).

6. The method according to claim 5, further comprising the following steps:
- opening the first flow control device (37) when the sewage has a predetermined level H₁ above the first heat exchanger (11) and/or when the sewage has a predetermined sewage temperature T_{W1} in the area of the first heat exchanger (11), and/or
- opening the second flow control device when the sewage has a predetermined level H₂ above the second heat exchanger (21) and/or when the sewage has a predetermined sewage temperature T_{W2} in the area of the second heat exchanger (21), and/or
- opening the third flow control device (51) when the sewage has a predetermined level H₃ above the third heat exchanger (41) and/or when the sewage has a predetermined sewage temperature T_{W3} in the area of the third heat exchanger (41).

7. The method according to one of claims 1 to 6, further comprising the following steps:
- detecting the thermal energy E₁ extracted by the heat sink (23) via the second heat exchanger (21);
- detecting the thermal energy E₂ extracted by a second heat sink (43) via the third heat exchanger (41); and
- controlling the amount of sewage flowing to the second heat exchanger (21) and to the third heat exchanger (41), so that a predetermined amount of thermal energy W₁ can be provided to the heat sink (23) via the second heat exchanger (21), and a predetermined amount of thermal energy W₂ can be provided to the second heat sink (43) via the third heat exchanger (41).

## Revendications

1. Procédé de transport d'énergie calorifique comprenant les étapes suivantes :
- mise à disposition d'un premier milieu d'échange de chaleur chaud (19) ;
- acheminement du premier milieu d'échange de chaleur chaud (19) dans ou par le biais d'un premier échangeur de chaleur (11) qui est disposé dans une conduite d'eaux usées (5) avec un sens d'écoulement des eaux usées F et vient en contact thermique avec les eaux usées (3) ;
- réchauffement des eaux usées (3) au moyen du premier échangeur de chaleur (11) ;
- réchauffement d'un second milieu d'échange de chaleur (29) dans un ou par le biais d'un deuxième échangeur de chaleur (21) par l'énergie calorifique des eaux usées (3), dans lequel le deuxième échangeur de chaleur (21) est disposé le long du sens d'écoulement des eaux usées F à l'écart du premier échangeur de chaleur (11) dans la conduite d'eaux usées (5) et dans lequel le deuxième échangeur de chaleur (21) vient en contact thermique avec les eaux usées (3) ;
- acheminement du second milieu d'échange de chaleur réchauffé (29) à un dissipateur thermique (23) ; et
- refroidissement du second milieu d'échange de chaleur (29) au moyen du dissipateur thermique (23).

2. Procédé selon la revendication 1, comprenant en outre les étapes suivantes :
- mesure de la température des eaux usées T₁ au moyen d'un premier capteur de température (33) qui est disposé en aval du premier échangeur de chaleur (11) dans la conduite d'eaux usées (5) ; et
- interruption ou réduction de l'acheminement du premier milieu d'échange de chaleur réchauffé (19) dans le premier échangeur de chaleur (11) lorsque la température des eaux usées mesurée T₁ dépasse une valeur maximale prédéterminée T_{1,max}.

3. Procédé selon la revendication 1 ou 2, comprenant en outre les étapes suivantes :
- mesure de la température des eaux usées T₂ au moyen d'un second capteur de température (35) qui est disposé en aval du deuxième échangeur de chaleur (21) dans la conduite d'eaux usées (5) ; et
- interruption ou réduction de l'acheminement du premier milieu d'échange de chaleur réchauffé (19) dans le premier échangeur de chaleur (11) lorsque la température des eaux usées mesurée T₂ dépasse une valeur maximale prédéterminée T_{2,max}.

4. Procédé selon une des revendications 1 à 3, comprenant en outre les étapes suivantes :
- mesure de la température des eaux usées T₂ au moyen d'un second capteur de température (35) qui est disposé en aval du deuxième échangeur de chaleur (21) dans la conduite d'eaux usées (5) ; et
- interruption ou réduction de l'acheminement du second milieu d'échange de chaleur froid (29) dans le deuxième échangeur de chaleur (21) lorsque la température des eaux usées mesurée T₂ dépasse par le bas une valeur minimale prédéterminée T_{2,min}.

5. Procédé selon une des revendications 1 à 4, comprenant en outre les étapes suivantes :
- restriction ou retenue du flux d'eaux usées à travers la conduite d'eaux usées (5) dans la région du premier échangeur de chaleur (11) au moyen d'un premier dispositif de commande de débit (37) et/ou
- restriction ou retenue du flux d'eaux usées à travers la conduite d'eaux usées (5) dans la région du deuxième échangeur de chaleur (21) au moyen d'un deuxième dispositif de commande de débit et/ou
- restriction ou retenue du flux d'eaux usées à travers une seconde conduite d'eaux usées (39) dans la région d'un troisième échangeur de chaleur (41) au moyen d'un troisième dispositif de commande de débit (51).

6. Procédé selon la revendication 5, comprenant en outre les étapes suivantes :
- ouverture du premier dispositif de commande de débit (37) lorsque les eaux usées présentent un niveau prédéterminé H₁ au-dessus du premier échangeur de chaleur (11) et/ou lorsque les eaux usées présentent une température des eaux usées prédéterminée T_{w1} dans la région du premier échangeur de chaleur (11), et/ou
- ouverture du deuxième dispositif de commande de débit lorsque les eaux usées présentent un niveau prédéterminé H₂ au-dessus du deuxième échangeur de chaleur (21) et/ou lorsque les eaux usées présentent une température des eaux usées prédéterminée T_{w2} dans la région du deuxième échangeur de chaleur (21), et/ou
- ouverture du troisième dispositif de commande de débit (51) lorsque les eaux usées présentent un niveau prédéterminé H₃ au-dessus du troisième échangeur de chaleur (41) et/ou lorsque les eaux usées présentent une température des eaux usées prédéterminée T_{w3} dans la région du troisième échangeur de chaleur (41).

7. Procédé selon une des revendications 1 à 6, comprenant en outre les étapes suivantes :
- détection de l'énergie thermique E₁ prélevée par le dissipateur thermique (23) par le biais du deuxième échangeur de chaleur (21) ;
- détection de l'énergie thermique E₂ prélevée par un second dissipateur thermique (43) par le biais du troisième échangeur de chaleur (41) ; et
- commande de la quantité d'eaux usées s'écoulant vers le deuxième échangeur de chaleur (21) et de celle s'écoulant vers le troisième échangeur de chaleur (41) de sorte qu'une quantité prédéterminée d'énergie thermique W₁ peut être mise à disposition du dissipateur thermique (23) par le biais du deuxième échangeur de chaleur (21) et une quantité prédéterminée d'énergie thermique W₂ peut être mise à disposition du second dissipateur thermique (43) par le biais du troisième échangeur de chaleur (41).
